# FASCICULE DE BREVET EUROPEEN

(11) **EP 2 919 954 B1**
(45) Date de publication et mention de la délivrance du brevet: **18.07.2018**
(21) Numéro de dépôt: 13808074.2
(22) Date de dépôt: 12.11.2013
(51) Int. Cl.: B29B 11/16, F01D 5/28, B29L 31/08

(54) **PREFORME ET MODULE D'AUBES MONOBLOC POUR UN CARTER INTERMEDIAIRE DE TURBOMACHINE**
MONOBLOCK-BLATTVORFORM UND MODUL FÜR EIN TURBOMASCHINENZWISCHENGEHÄUSE
MONOBLOC BLADE PREFORM AND MODULE FOR A TURBO MACHINE INTERMEDIATE CASING

(30) Priorité: 13.11.2012 US 201261725622 P
(43) Date de publication de la demande: 23.09.2015
(73) Titulaire: Safran Aircraft Engines, 75015 Paris (FR)
(72) Inventeur: GIMAT, Matthieu, F-77550 Moissy-Cramayel Cedex (FR); COUPE, Dominique, Marie, Christian, F-33185 Le Haillan (FR); MARCHAL, Yann, F-77550 Moissy-Cramayel Cedex (FR); PAPIN, Thierry, Georges, Paul, F-77550 Moissy-Cramayel Cedex (FR)
(74) Mandataire: Joanny, Damien Henri Xavier
(86) Numéro de dépôt international: PCT/FR2013/052713
(87) Numéro de publication internationale: WO 2014/076407

(56) Documents cités:
- WO-A1-91/15357
- WO-A2-98/08370
- FR-A1- 2 946 999
- FR-A1- 2 953 885

## Description

### DOMAINE DE L'INVENTION

Le présent exposé concerne une préforme fibreuse pour un module d'aubes en matériau composite d'un carter intermédiaire de turbomachine, ainsi qu'un module d'aube monobloc, un carter intermédiaire et une turbomachine ainsi obtenus.

Une telle préforme peut être utilisée pour réaliser en une seule pièce des modules d'aubage intégrant plusieurs aubes ainsi que des parties transverses d'aubage telles des brides ou des plates-formes aérodynamiques. De tels modules, possédant une raideur importante, peuvent être intégrés dans le carter intermédiaire d'un turboréacteur d'avion par exemple.

### ETAT DE LA TECHNIQUE ANTERIEURE

Un turboréacteur classique à double flux comporte une soufflante dont le flux est divisé entre un flux primaire, dirigé vers les compresseurs, la chambre de combustion puis les turbines de la turbomachine, et un flux secondaire de dilution fournissant une part essentielle de la poussée.

Le flux secondaire circule dans une veine secondaire prévue entre le carter extérieur du réacteur et un carter intérieur renfermant la partie chaude de la turbomachine. Ces deux carters sont reliés et maintenus en place par un carter intermédiaire composé d'un moyeu intérieur, d'une virole extérieure et d'une pluralité de bras structuraux radiaux reliant le moyeu intérieur à la virole extérieure. Outre leur fonction structurale permettant de supporter les charges issues de la dynamique d'ensemble de la turbomachine, certains de ces bras structuraux sont creux et permettent ainsi le passage de servitudes telles que des canalisations de fluides, des câbles électriques ou encore des organes de transmission de puissance mécanique.

En outre, une telle turbomachine comprend un redresseur, composé d'une pluralité d'aubes fixes communément appelées OGV (« outlet guide vanes »), permettant de redresser le flux secondaire issu de la soufflante.

Afin de réduire la masse des turboréacteurs et le nombre de pièces les composant, il a été proposé des carters intermédiaires intégrant la fonction de redresseur dans lesquels certains bras structuraux ont été remplacés par des aubes OGV. Toutefois, de telles aubes doivent ainsi assurer, en plus de leur fonction aérodynamique, une fonction structurale pour laquelle elles ne sont pas habituellement conçues.

Pour renforcer la tenue mécanique de telles aubes, il a alors été proposé, notamment dans la demande de brevet français FR 2 956 876, de concevoir des modules prenant la forme de caissons composés de deux aubes boulonnées tangentiellement sur des plates-formes intérieures et extérieures. Toutefois, si les progrès apportés par cette solution sont déjà sensibles, la raideur d'ensemble d'un tel module est limitée par les jonctions tangentielles des boulons. En outre, une telle solution implique encore un nombre important de pièces, notamment de visserie, que l'on aimerait réduire pour gagner encore de la masse et du temps de maintenance.

On connait également le document FR 2 946 999 décrivant une préforme fibreuse pour la fabrication d'un élément de distributeur de turbine.

Il existe donc un réel besoin pour une préforme fibreuse, un module d'aube, un carter intermédiaire et une turbomachine qui soient dépourvus des inconvénients inhérents aux systèmes connus précités.

### PRESENTATION DE L'INVENTION

La présente invention concerne une préforme fibreuse selon la revendication 1 annexée ainsi qu'une préforme fibreuse selon la revendication 2 annexée.

Plus généralement, le présent exposé concerne une préforme fibreuse pour un module d'aubes de carter intermédiaire de turbomachine, obtenue par tissage tridimensionnel. Cette préforme comprend un premier tronçon longitudinal, présentant des première et seconde extrémités opposées, apte à former une première aube, un deuxième tronçon longitudinal, présentant des première et seconde extrémités opposées, apte à former une deuxième aube, un premier tronçon transversal, reliant les premier et deuxième tronçons longitudinaux par leurs premières extrémités, apte à former une première partie transverse d'aubage telle une bride ou une plate-forme.

Dans le présent exposé, les termes « longitudinal », « transversal », « inférieur », « supérieur » et leurs dérivés sont définis par rapport à la direction principale des aubes formant un module ; les termes « axial », « radial », « tangentiel », « intérieur », « extérieur » et leurs dérivés sont quant à eux définis par rapport à l'axe principal du carter intermédiaire et de la turbomachine.

On entend ici par « partie transverse d'aubage » une partie du module sensiblement transverse aux aubes : il peut s'agir tout particulièrement d'une bride de fixation destinée à s'appuyer contre la virole extérieure ou le moyeu intérieur du carter intermédiaire et à permettre la fixation du module grâce à des perçages ou à des pattes de fixations ; il peut également s'agir d'une plate-forme aérodynamique permettant de munir la veine secondaire de parois lisses ne perturbant pas la circulation secondaire. D'autres parties transverses d'aubages sont envisageables.

Grâce à cette préforme, il est possible de concevoir de manière monobloc un module composé d'au moins deux aubes connectées par l'une de leurs extrémités : une telle géométrie monobloc permet de répartir les charges mécaniques plus efficacement sur le doublet d'aubes. Il en découle une raideur d'ensemble du module augmentée qui autorise des pièces moins massives, offrant ainsi de substantielles économies en fonctionnement. Le choix des matériaux composites offre également un gain de masse important par rapport aux mêmes pièces réalisées en métal ou en céramique.

En outre, grâce à cette conception monobloc, le nombre de pièces à concevoir et à assembler est fortement réduit : en particulier, on économise des pièces de visserie, et donc la masse et le coût qui leurs sont associés.

Naturellement, la maintenance d'un tel module monobloc est également facilitée puisque les opérations de démontage sont réduites : en particulier, il est possible d'intervenir directement sous l'aile grâce à des fixations moins nombreuses et plus accessibles.

Dans certains modes de réalisation, la préforme comprend en outre un deuxième tronçon transversal, s'étendant transversalement depuis la seconde extrémité du premier tronçon longitudinal, apte à former une deuxième partie transverse d'aubage, et un troisième tronçon transversal, s'étendant transversalement depuis la seconde extrémité du deuxième tronçon longitudinal, apte à former une troisième partie transverse d'aubage. Le nombre de pièces intégrées augmentant, le nombre de fixations nécessaires diminue encore : la raideur d'ensemble s'en trouve améliorée, l'assemblage et le démontage facilités tandis que le nombre de références et la masse sont encore réduits.

Dans certains modes de réalisation, le deuxième tronçon transversal s'étend en s'éloignant du deuxième tronçon longitudinal, et le troisième tronçon transversal s'étend en s'éloignant du premier tronçon longitudinal. On obtient ainsi une préforme ayant la forme d'un omega.

Dans certains modes de réalisation, le deuxième tronçon transversal s'étend vers le deuxième tronçon longitudinal, et le troisième tronçon transversal s'étend en s'éloignant du premier tronçon longitudinal. On obtient ainsi une structure de caisson.

Dans certains modes de réalisation, le deuxième tronçon transversal s'étend vers le deuxième tronçon longitudinal, et le troisième tronçon transversal s'étend vers le premier tronçon longitudinal. On obtient une autre structure de caisson dans laquelle les deuxième et troisième tronçons transversaux sont dirigés l'un vers l'autre.

Dans certains modes de réalisation, les deuxième et troisième tronçons transversaux se recouvrent au moins partiellement. Cette zone de recouvrement bénéficie ainsi d'une raideur et d'une épaisseur plus importantes, et offre donc de plus grandes possibilités de perçage.

Dans d'autres modes de réalisation, les deuxième et troisième tronçons transversaux sont ajustés l'un dans le prolongement de l'autre. Ce mode de réalisation privilégie un encombrement et une masse réduits.

Dans certains modes de réalisation, dans les zones de recouvrement, les tronçons se recouvrant sont collés ensemble. Ils peuvent également être cousus.

Dans certains modes de réalisation, la préforme comprend une première et une deuxième nappe, tissées conjointement, comportant une zone de liaison formant un tronçon transversal supplémentaire, apte à former une partie transverse d'aubage, et une zone de déliaison dans laquelle la première nappe forme le premier tronçon transversal et le premier tronçon longitudinal et dans laquelle la deuxième nappe forme le deuxième tronçon longitudinal. Une telle déliaison permet d'obtenir une géométrie ramifiée.

Dans certains modes de réalisation, la préforme comprend au moins trois tronçons longitudinaux aptes à former au moins trois aubes. Naturellement, la même technique peut s'étendre à des n-uplets d'aubes.

Dans certains modes de réalisation, les tronçons transversaux comportent plus de couches de fils, et sont donc plus épais, que les tronçons longitudinaux. De cette manière, les aubes peuvent être fines pour jouer efficacement leur rôle aérodynamique tandis que les parties transverses d'aubage peuvent être plus épaisses pour permettre une fixation solide du module.

Dans certains modes de réalisation, les tronçons transversaux sont tissés avec des surlongueurs pour former des pattes de fixation. Ces surlongueurs peuvent être latérales et repliées radialement pour permettre une fixation axiale des parties transverses d'aubage sur le carter intermédiaire. Elles peuvent également être extrémales et repliées radialement pour permettre une fixation tangentielle des parties transverses d'aubage sur le carter intermédiaire.

Dans certains modes de réalisation, les tronçons longitudinaux sont tissés avec des surlongueurs pour former des pattes de fixation. Ces surlongueurs prolongent alors longitudinalement ces tronçons longitudinaux pour permettre une fixation tangentielle des aubes sur le carter intermédiaire.

Dans certains modes de réalisation, les fils utilisés pour le tissage de la préforme sont des fibres de carbone. Il peut toutefois s'agir de n'importe quel autre type de fil, par exemple des fibres de verre ou de kevlar.

Dans certains modes de réalisation, l'armure utilisée pour le tissage tridimensionnel de la préforme peut être du type interlock 3D. Toutefois, le tissage des surfaces externes de la préforme peut être essentiellement bidimensionnel, du type satin par exemple.

Le présent exposé concerne en outre un module pour la réalisation d'un carter intermédiaire de turbomachine, ledit module comportant deux aubes longitudinales et une partie transverse d'aubage, telle une bride ou une plate-forme, reliant les deux aubes à l'une de leurs extrémités, ledit module étant une pièce monobloc.

Grâce à cette géométrie monobloc intégrant au moins deux aubes et une partie transverse d'aubage, on obtient les avantages décrits plus haut en termes de tenue mécanique, masse, coût, démontabilité et facilité de mise en oeuvre.

Dans certains modes de réalisation, ce module est réalisé en matériau composite à partir d'une préforme fibreuse selon un des modes de réalisation ci-dessus, ladite préforme ayant été mise en forme et noyée dans une matrice.

Dans certains modes de réalisation, la matrice est de type organique. Il peut notamment s'agir d'une résine époxy.

Dans d'autres modes de réalisation, la matrice est du type céramique.

Le présent exposé concerne également un carter intermédiaire pour une turbomachine, comprenant une pluralité de modules selon l'un des modes de réalisation ci-dessus et disposés angulairement entre un moyeu intérieur et une virole extérieure.

Dans certains modes de réalisation, le carter intermédiaire comprend des modules présentant des configurations différentes parmi celles des modes de réalisation présentés ci-dessus pour s'adapter aux spécificités de chaque zone du carter intermédiaire, notamment en termes de charges mécaniques ou d'accessibilités pour le démontage.

En particulier, dans certains modes de réalisation, certains modules sont disposés tête-bêche au sein du carter intermédiaire.

Le présent exposé concerne enfin une turbomachine comprenant un carter intermédiaire selon un des modes de réalisation ci-dessus.

Les caractéristiques et avantages précités, ainsi que d'autres, apparaîtront à la lecture de la description détaillée qui suit, d'exemples de réalisation de la préforme, du module, du carter intermédiaire et de la turbomachine proposés. Cette description détaillée fait référence aux dessins annexés.

### BREVE DESCRIPTION DES DESSINS

Les dessins annexés sont schématiques et visent avant tout à illustrer les principes de l'invention.

Sur ces dessins, d'une figure (FIG) à l'autre, des éléments (ou parties d'élément) identiques sont repérés par les mêmes signes de référence. En outre, des éléments (ou parties d'élément) appartenant à des exemples de réalisation différents mais ayant une fonction analogue sont repérés sur les figures par des références numériques incrémentées de 100, 200, etc.
La FIG 1 est un plan en coupe d'une turbomachine selon l'invention.
La FIG 2 est une vue de face d'un carter intermédiaire selon un premier exemple de réalisation.
Les FIG 3A-E représentent un premier exemple de module selon l'invention : les FIG 3A et 3B représentent en perspective deux variantes d'un tel module ; la FIG 3C, la roue complète associée ; la FIG 3D, la préforme à plat ; et la FIG 3E, la mise en forme de la préforme.
Les FIG 4A-F représentent un deuxième exemple de module selon l'invention : la FIG 4A représente en perspective un tel module ; la FIG 4B, la roue complète associée ; la FIG 4C, la préforme à plat ; la FIG 4D, la mise en forme de la préforme ; et les FIG 4E et 4F des variantes de fixation du module.
Les FIG 5A-E représentent un troisième exemple de module selon l'invention : la FIG 5A représente en perspective un tel module ; la FIG 5B, la roue complète associée ; la FIG 5C, la préforme à plat ; et les FIG 5D et 5E, deux variantes de la mise en forme de la préforme.
Les FIG 6A-H représentent un quatrième exemple de module selon l'invention : la FIG 6A représente en perspective un tel module ; la FIG 6B, la roue complète associée ; la FIG 6C, la préforme à plat ; la FIG 6D, la mise en forme de la préforme ; la FIG 6E, un schéma de tissage d'une déliaison ; la FIG 6F, une variante de mise en forme de la préforme ; la FIG 6G, une variante de réalisation du module ; et la FIG 6H, la mise en forme de cette variante.

### DESCRIPTION DETAILLEE D'EXEMPLES DE REALISATION

Afin de rendre plus concrète l'invention, des exemples de réalisation sont décrits en détail ci-après, en référence aux dessins annexés. Il est rappelé que l'invention ne se limite pas à ces exemples.

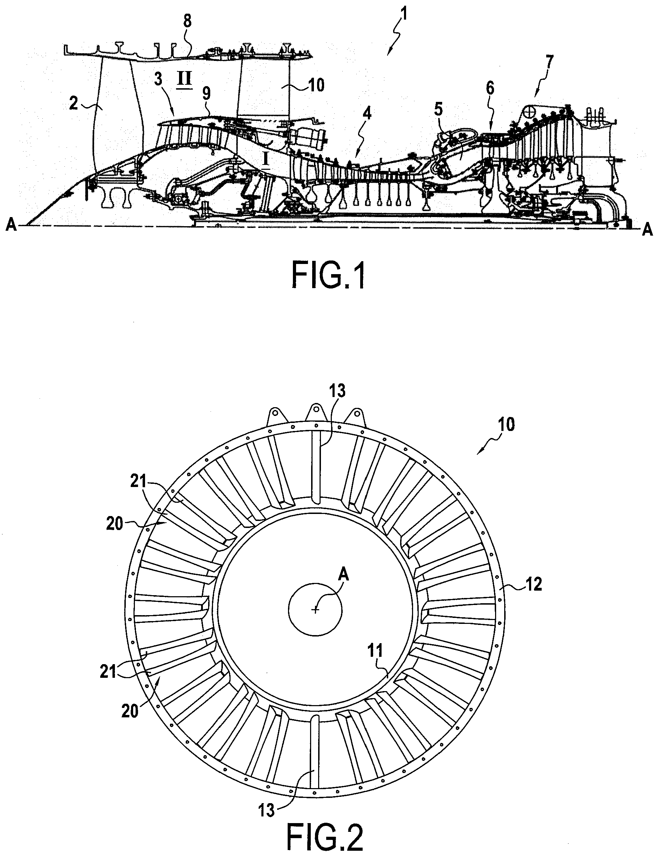

La FIG 1 représente, en coupe selon un plan vertical passant par son axe principal A, un turboréacteur à double flux 1 selon l'invention. Il comporte, d'amont en aval, une soufflante 2, un compresseur basse pression 3, un compresseur haute pression 4, une chambre de combustion 5, une turbine haute pression 6, et une turbine basse pression 7. Dans sa partie amont, ce turboréacteur 1 comprend un carter extérieur 8 et un carter intérieur 9 définissant deux veines concentriques primaire I et secondaire II. Un carter intermédiaire 10 relie les carters extérieur 8 et intérieur 9.

En fonctionnement, le carter intérieur 9 divise le flux accéléré par la soufflante 2 entre un flux primaire empruntant la veine primaire I et alimentant les compresseurs 3, 4, la chambre de combustion 5 et les turbines 6,7, et un flux secondaire empruntant la veine secondaire II et éjecté hors du turboréacteur, fournissant ainsi l'essentiel de sa poussée.

La FIG 2 représente de face, de manière schématique, un tel carter intermédiaire 10. Ce dernier comporte un moyeu intérieur 11, fixé sur le carter intérieur 9, et une virole extérieure 12, fixée dans le carter extérieur 8. Le moyeu intérieur 11 et la virole extérieure 12 sont reliés radialement, d'une part, par des bras structuraux 13 et, d'autre part, par des aubes de redresseur 21, communément appelées aubes OGV (pour « outlet guide vanes »), regroupées par doublets au sein de modules monoblocs 20.

Les bras structuraux 13 sont creux et permettent le passage de servitudes entre le coeur du réacteur enfermé dans le carter intérieur 9 et la périphérie du réacteur 1. De telles servitudes comprennent notamment des canalisations hydrauliques, des conduites pneumatiques, des câbles électriques ou encore des arbres de transmission de puissance mécanique. Ces bras structuraux sont situés préférentiellement à 6h et à 12h par rapport à l'axe A du turboréacteur 1, c'est-à-dire dans le plan vertical où s'accumulent le plus les charges mécaniques exercées par le poids propre du turboréacteur 1.

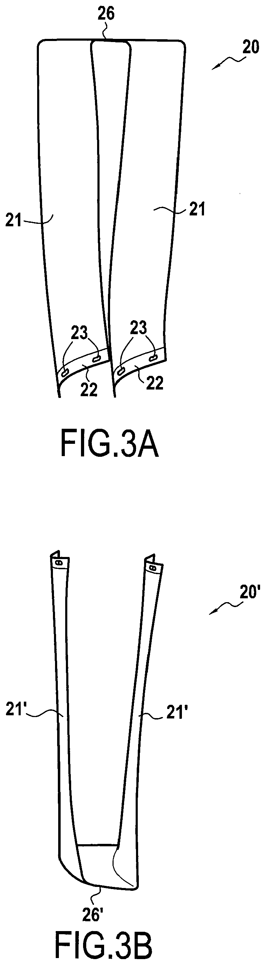

Les FIG 3A à 3E présentent un premier exemple de module pour un tel carter intermédiaire 10. Sur la FIG 3A, on observe que ce premier exemple de module 20 prend la forme générale d'un U. Il comprend deux aubes 21 longitudinales et une partie transverse d'aubage 26 reliant les deux aubes 21 à leurs extrémités supérieures.

En fonction du type de fixation du module 20 sur le carter intermédiaire 10 au niveau de cette partie transverse d'aubage 26, cette dernière peut être une plate-forme aérodynamique constituant une paroi lisse et aérodynamique pour la veine secondaire II de la turbomachine 1 ou une bride de fixation du module 20 sur le carter intermédiaire 10. En particulier, si la partie transverse d'aubage 26 est dépourvue de fixations ou pourvue de fixations aptes à ne pas dépasser dans la veine II, telles que des fixations axiales ou tangentielles, la partie transverse d'aubage 26 peut jouer le rôle de plate-forme. En revanche, si la partie transverse d'aubage 26 nécessite une fixation dépassant dans la veine II, notamment dans le cas d'une fixation radiale, la partie transverse d'aubage 26 jouera le rôle de bride tandis qu'une plate-forme aérodynamique devra être superposée sur la partie transverse d'aubage 26 pour masquer ces fixations. De tels exemples seront illustrés en référence au deuxième exemple de réalisation ci-après.

Les aubes 21 comprennent ici à leurs extrémités libres, c'est-à-dire leurs extrémités inférieures, des surlongueurs 22, munies de perçages 23, aptes à s'insérer dans un socle fixé sur le carter intermédiaire 10 pour permettre la fixation du module 20 : le module 20 est ainsi retenu tangentiellement par des éléments de fixation tels des boulons s'insérant dans les perçages 23.

La FIG 3B illustre une variante de réalisation d'un module en U 20' qui propose une configuration inversée tête-bêche avec la variante de la FIG 3A : ce module 20' possède lui aussi deux aubes 21' et une partie transverse d'aubage 26' mais cette dernière relie ici les extrémités inférieures des aubes 21'. En outre, les branches du U sont ici légèrement divergentes tandis qu'elles étaient légèrement convergentes dans la variante de la FIG 3A : en effet, ces inclinaisons assurent que les aubes 21 et 21' soient bien disposées radialement dans le carter intermédiaire 10.

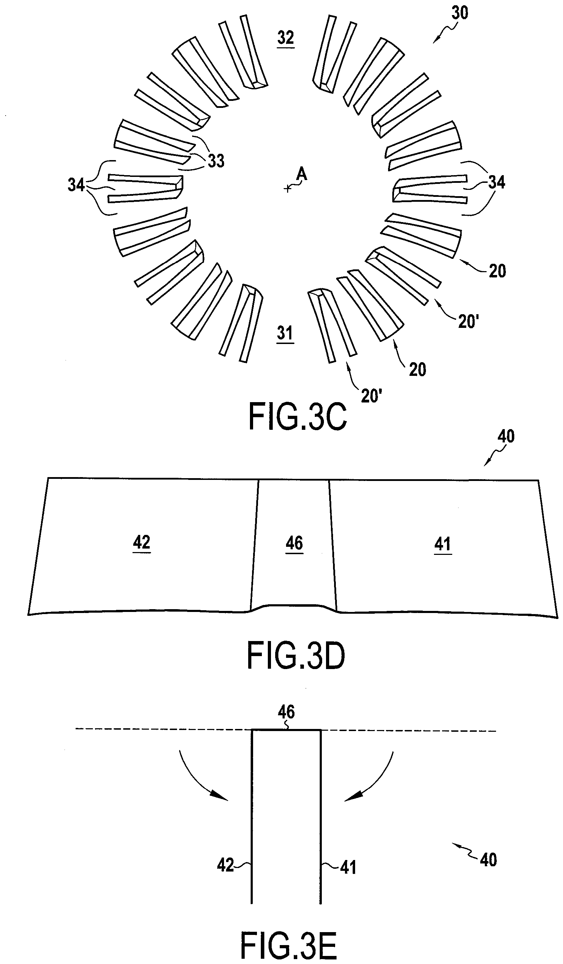

La FIG 3C illustre la roue complète 30 constituée des modules 20 et 20' qui sera montée dans le carter intermédiaire 10. Cette roue 30 comprend ainsi une succession de modules alternativement selon la variante 20 de la FIG 3A ou celle 20' de la FIG 3B : cette disposition tête-bêche permet de renforcer la raideur d'ensemble de la roue. En outre, les modules 20, 20' sont disposés de manière à ce que l'écartement entre les aubes 21, 21' soit sensiblement identique tout le long de la roue 30. Les secteurs vacants 31 et 32 situés respectivement à 6h et 12h par rapport à l'axe principal A correspondent à la position des bras structuraux 13 du carter intermédiaire 10. Les segments vacants intérieurs 33 et extérieurs 34 situés respectivement entre les parties transverses d'aubage inférieures 26' et supérieures 26 des modules 20, 20' peuvent être comblés lors du montage de la roue 30 dans le carter intermédiaire 10 par des panneaux aérodynamiques (non représentés) permettant de compléter la paroi de la veine secondaire II.

La FIG 3D représente à plat la préforme 40 tissée tridimensionnellement permettant de réaliser ce premier exemple de module 20. La FIG 3E illustre la mise en forme de cette préforme 40 afin d'obtenir le module 20. D'amont en aval, c'est-à-dire de la droite vers la gauche des figures, cette préforme 40 comprend un premier tronçon longitudinal 41, qui formera une première aube 21, un tronçon transversal 46, qui formera la partie transverse d'aubage 26, et un deuxième tronçon longitudinal 42, qui formera la deuxième aube 21 du module 20.

Cette préforme 40 est issue d'une nappe tissée tridimensionnellement en fibres de carbone selon une armure interlock 3D. Seules les surfaces de la préforme 40 sont tissées bidimensionnellement selon une armure de type satin. Afin d'obtenir des aubes 21 fines et des parties transverses d'aubage 26 plus épaisses, le tronçon transversal 46 de la préforme 40 comporte un nombre plus important de couches de fils que les tronçons longitudinaux 41 et 42 : des méthodes de tissage permettant une telle variation d'épaisseur et de nombre de couches sont désormais bien connues dans le domaine du tissage 3D. Une fois cette nappe tissée, elle doit être découpée et mise en forme pour obtenir la géométrie de module souhaitée. Ces opérations sont assistées par ordinateur. Des algorithmes permettent ainsi de calculer le patron de la préforme 40 qui doit être découpé dans la nappe obtenue par le tissage. En outre, des algorithmes calculent la courbe directrice selon laquelle devra être effectuée la mise en forme.

Une fois découpée, la préforme 40 est alors humidifiée pour l'assouplir et permettre un décadrage plus aisé des fibres. La préforme 40 est ensuite introduite, selon la courbe directrice calculée, dans un moule de formage dont l'espace intérieur est ajusté à la géométrie recherchée pour la préforme 40. Dans cet exemple de réalisation, comme l'indiquent les flèches de la FIG 3E, la mise en forme consiste essentiellement à replier les tronçons longitudinaux 41, 42 par rapport au tronçon transversal 46.

On sèche alors la préforme 40 afin que celle-ci se raidisse, bloquant ainsi la géométrie imposée lors de la mise en forme. La préforme 40 est enfin disposée dans un moule d'injection, aux dimensions du module final souhaité, dans lequel on injecte une matrice, ici une résine epoxy. Une telle injection peut par exemple être réalisée par le procédé connu RTM (« resin transfer molding »). A l'issue de cette étape, on obtient alors un module 20 en matériau composite composé d'une préforme 40 tissée en fibres de carbone noyée dans une matrice époxy. Des étapes d'usinage peuvent éventuellement compléter ce procédé pour finaliser le module 20.

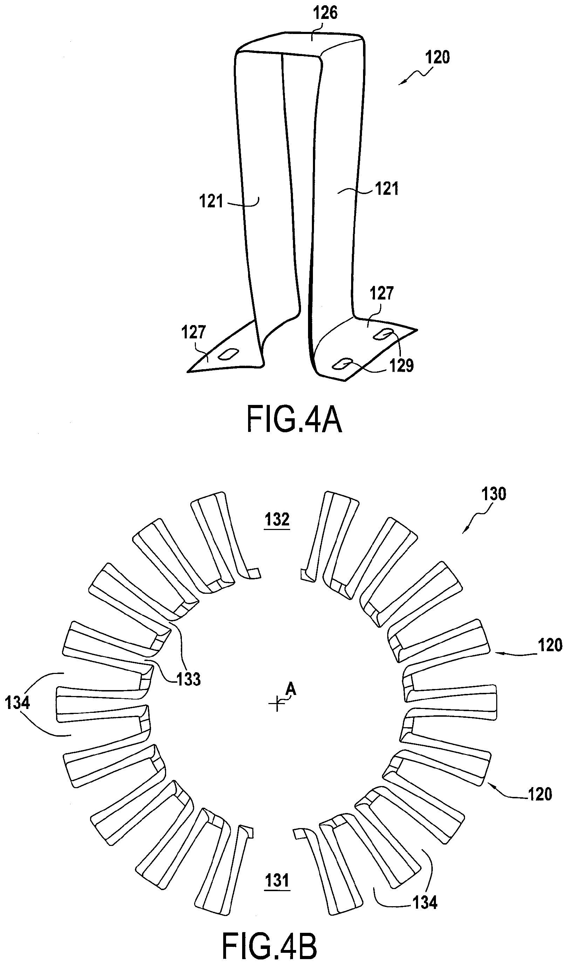

Les FIG 4A à 4F présentent un deuxième exemple de module pour le carter intermédiaire 10. Sur la FIG 4A, on observe que ce deuxième exemple de module 120 prend la forme générale d'un omega. Il comprend deux aubes 121 longitudinales, une partie transverse d'aubage supérieure 126 reliant les deux aubes 121 à leurs extrémités supérieures et deux parties transverses d'aubage inférieures 127 s'étendant chacune transversalement depuis l'extrémité inférieure d'un aube 121 dans des sens opposés.

Dans la FIG 4A, les parties transverses d'aubage inférieures 127 sont munies de perçages radiaux 129 permettant la fixation du module 120 sur le carter intermédiaire 10. Ces parties transverses d'aubage inférieures 127 prennent donc la forme de brides de fixation nécessitant la mise en place de plates-formes aérodynamiques disposées par-dessus les brides 127 pour masquer les éléments de fixation qui feraient sans cela saillie dans la veine secondaire II.

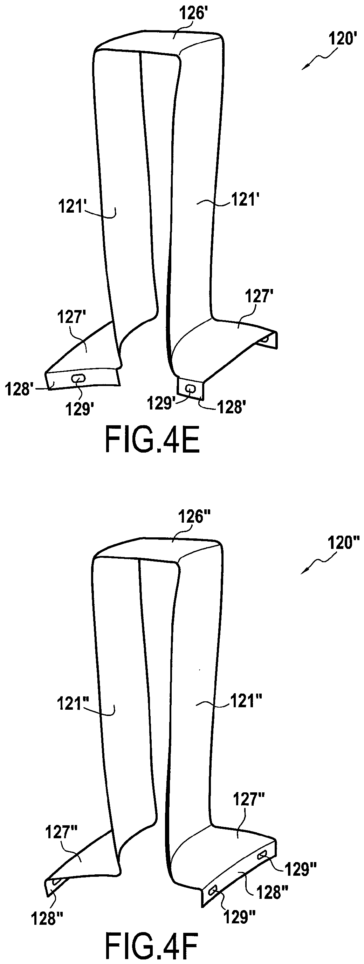

La FIG 4E présente une variante de fixation dans laquelle les parties transverses d'aubage inférieures 127' du module 120' sont munies de surlongueurs latérales 128' formant des pattes de fixation munies de perçages axiaux 129'. Les éléments de fixation étant alors prévu sous les parties transverses d'aubage inférieures 127' : ils ne font donc pas saillie dans la veine secondaire II et les parties transverses d'aubage inférieures 127' peuvent jouer le rôle de plates-formes.

Il en va de même dans la seconde variante de fixation de la FIG 4F dans laquelle les parties transverses d'aubage inférieures 127" du module 120" sont munies de surlongueurs extrémales 128" formant des pattes de fixation munies de perçages tangentiels 129".

Bien que cela ne soit pas représenté, il faut noter que la partie transverses d'aubage supérieure 126 dispose également de plusieurs possibilités de fixation, et notamment les fixations de type radiale et axiale telles que présentées ci-dessus.

Il faut également noter qu'une variante inversée tête-bêche sur le modèle du module 20' de la FIG 3B est également envisageable.

La FIG 4B illustre la roue complète 130 constituée des modules 120 qui sera montée dans le carter intermédiaire. Cette roue 130 comprend ainsi une succession de modules contigus, disposés de manière à ce que l'écartement entre les aubes 121 soit sensiblement identique tout le long de la roue 130. Les secteurs vacants 131 et 132, situés respectivement à 6h et 12h par rapport à l'axe principal A, correspondent à la position des bras structuraux 13 du carter intermédiaire 10. Les segments vacants intérieurs 133 et extérieurs 134 situés respectivement entre les parties transverses d'aubage inférieures 127 et supérieures 126 des modules 120 peuvent être comblés lors du montage de la roue 130 dans le carter intermédiaire 10 par des panneaux aérodynamiques (non représentés) permettant de compléter la paroi de la veine secondaire II.

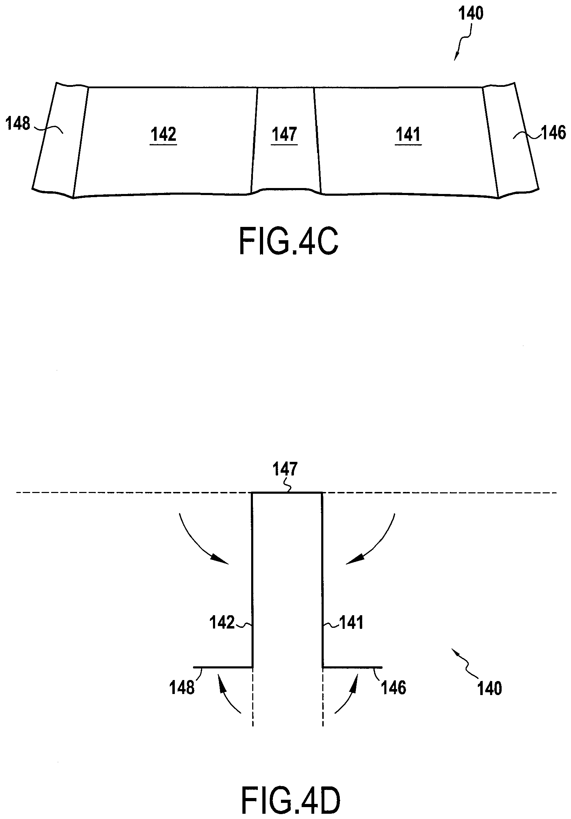

La FIG 4C représente à plat la préforme 140 tissée 3D permettant de réaliser ce deuxième exemple de module 120. La FIG 4D illustre la mise en forme de cette préforme 140 afin d'obtenir le module 120. D'amont en aval, c'est-à-dire de la droite vers la gauche des figures, cette préforme 140 comprend un premier tronçon transversal 146, qui formera une partie transverse d'aubage inférieure 127, un premier tronçon longitudinal 141, qui formera une première aube 121, un deuxième tronçon transversal 147, qui formera la partie transverse d'aubage supérieure 126, un deuxième tronçon longitudinal 142, qui formera la deuxième aube 121, et un troisième tronçon transversal 148, qui formera la deuxième partie transverse d'aubage inférieure 127 du module 120.

Le tissage et la mise en forme de cette préforme 140 ainsi que le procédé de formation du module sont analogues à ceux du premier exemple de réalisation et ne seront donc pas décrits de nouveau en détails. Dans cet exemple de réalisation, comme l'indiquent les flèches de la FIG 4D, la mise en forme consiste essentiellement à replier les tronçons longitudinaux 141, 142 par rapport au deuxième tronçon transversal 147 et de rabattre les premier et troisième tronçons transversaux 146 et 148 à l'opposé l'un de l'autre.

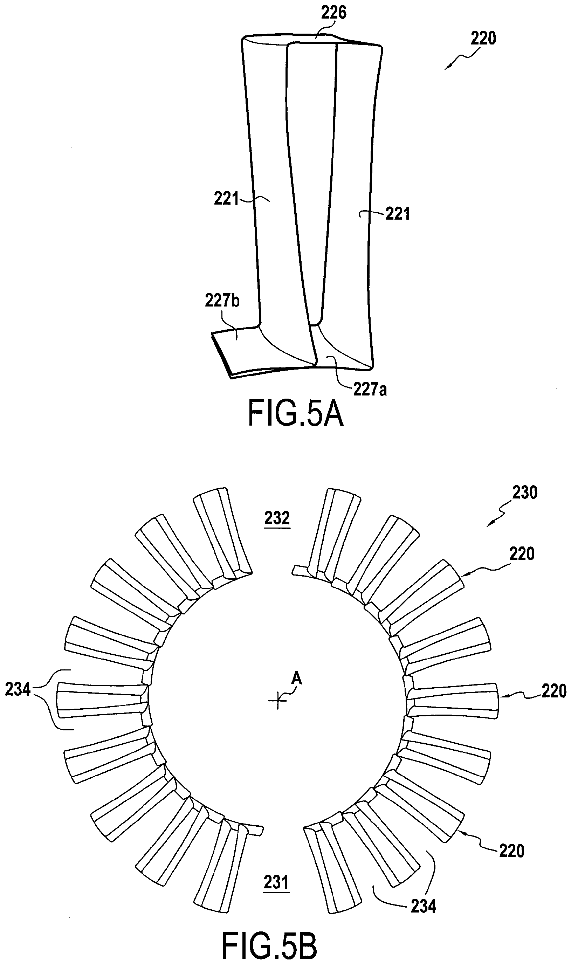

Les FIG 5A à 5E présentent un troisième exemple de module pour le carter intermédiaire 10. Sur la FIG 5A, on observe que ce troisième exemple de module 220 prend la forme générale d'un caisson. Il comprend deux aubes 221 longitudinales, une partie transverse d'aubage supérieure 226 reliant les deux aubes 221 à leurs extrémités supérieures et deux parties transverses d'aubage inférieures 227a et 227b, la première 227a s'étendant entre les extrémités inférieures des aubes 221, et la deuxième s'étendant transversalement depuis l'extrémité inférieure de l'une des aubes 121 vers l'extérieur du module 220.

Les différentes variantes de fixation de ce module 220 sont analogues à celles déjà présentées et ne seront donc pas décrites ni représentées à nouveau.

Il faut également noter qu'une variante inversée tête-bêche sur le modèle du module 20' de la FIG 3B est également envisageable.

La FIG 5B illustre la roue complète 230 constituée des modules 220 qui sera montée dans le carter intermédiaire 10. Cette roue 230 comprend ainsi une succession de modules 220 contigus, disposés de manière à ce que l'écartement entre les aubes 221 soit sensiblement identique tout le long de la roue 230. Les secteurs vacants 231 et 232 situés respectivement à 6h et 12h par rapport à l'axe principal A correspondent à la position des bras structuraux 13 du carter intermédiaire 10. Les segments vacants extérieurs 234 situés entre les parties transverses d'aubage supérieures 226 des modules 220 peuvent être comblés lors du montage de la roue 130 dans le carter intermédiaire 10 par des panneaux aérodynamiques (non représentés) permettant de compléter la paroi de la veine secondaire II. Il faut noter ici que la géométrie de ce module 220 ne laisse vacant aucun segment intérieur.

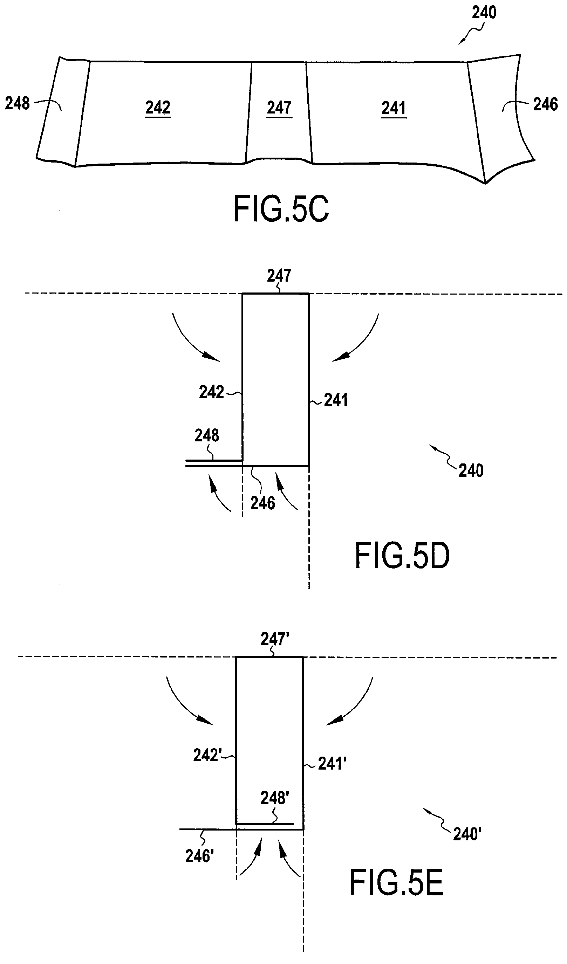

La FIG 5C représente à plat la préforme 240 tissée 3D permettant de réaliser ce troisième exemple de module 220. La FIG 5D illustre la mise en forme de cette préforme 240 afin d'obtenir le module 220. D'amont en aval, c'est-à-dire de la droite vers la gauche des figures, cette préforme 240 comprend un premier tronçon transversal 246, qui formera la première partie transverse d'aubage inférieure 227a et la portion inférieure de la seconde partie transverse d'aubage inférieure 227b, un premier tronçon longitudinal 241, qui formera une première aube 221, un deuxième tronçon transversal 247, qui formera la partie transverse d'aubage supérieure 226, un deuxième tronçon longitudinal 242, qui formera la deuxième aube 221, et un troisième tronçon transversal 248, qui formera la portion supérieure de la seconde partie transverse d'aubage inférieure 227b du module 220.

Le tissage et la mise en forme de cette préforme 240 ainsi que le procédé de formation du module sont analogues à ceux du premier exemple de réalisation et ne seront donc pas décrits de nouveau en détails. Dans cet exemple de réalisation, comme l'indiquent les flèches de la FIG 5D, la mise en forme consiste essentiellement à replier les tronçons longitudinaux 241, 242 par rapport au deuxième tronçon transversal 247, à rabattre le troisième tronçon transversal 248 vers l'extérieur puis de rabattre le premier tronçon transversal 246 sur le troisième tronçon transversal 248. Dans cette zone de recouvrement, les premier et troisième tronçons transversaux 246 et 248 peuvent être solidarisés, par collage notamment.

Selon une variante représentée sur la FIG 5E, la préforme 240' comporte les mêmes tronçons 246', 241', 247', 242', 248' que dans l'exemple précédent mais la mise en forme diffère de celle de ce dernier. En effet, selon cette variante, le troisième tronçon transversal 248' est rabattu vers l'intérieur, formant ainsi la portion supérieure de la première partie transverse d'aubage inférieure 227a', et le premier tronçon transversal 246' est rabattu sur le troisième tronçon transversal 248', formant ainsi la portion inférieure de la première partie transverse d'aubage inférieure 227a' et la deuxième partie transverse d'aubage inférieure 227b'.

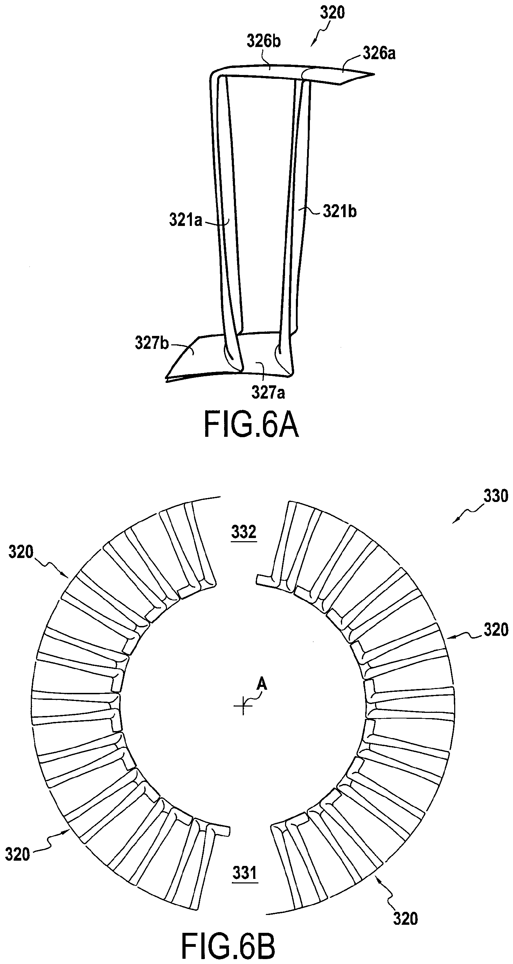

Les FIG 6A à 6H présentent un quatrième exemple de module pour le carter intermédiaire 10. Sur la FIG 6A, on observe que ce quatrième exemple de module 320 comprend une première et une deuxième aubes longitudinales 321a et 321b, une première partie transverse d'aubage supérieure 326a s'étendant transversalement depuis l'extrémité supérieure de la deuxième aube 321b vers l'extérieur du module 320, une deuxième partie transverse d'aubage supérieure 326b reliant les deux aubes 321a et 321b à leurs extrémités supérieures, une première partie transverse d'aubage inférieure 327a s'étendant entre les extrémités inférieures des aubes 321a et 321b, et une deuxième partie transverse d'aubage inférieure 327b s'étendant transversalement depuis l'extrémité inférieure de la première aube 321a vers l'extérieur du module 320.

Les différentes variantes de fixation de ce module 320 sont analogues à celles déjà présentées et ne seront donc pas décrites ni représentées à nouveau.

Il faut également noter qu'une variante inversée tête-bêche sur le modèle du module 20' de la FIG 3B est également envisageable.

La FIG 6B illustre la roue complète 330 constituées des modules 320 qui sera montée dans le carter intermédiaire 10. Cette roue 330 comprend ainsi une succession de modules 320 contigus, disposés de manière à ce que l'écartement entre les aubes 321a, 321b soit sensiblement identique tout le long de la roue 230. Les secteurs vacants 331 et 332 situés respectivement à 6h et 12h par rapport à l'axe principal A correspondent à la position des bras structuraux 13 du carter intermédiaire 10. Il faut noter ici que la géométrie de ce module 320 ne laisse vacant aucun segment intérieur ou extérieur.

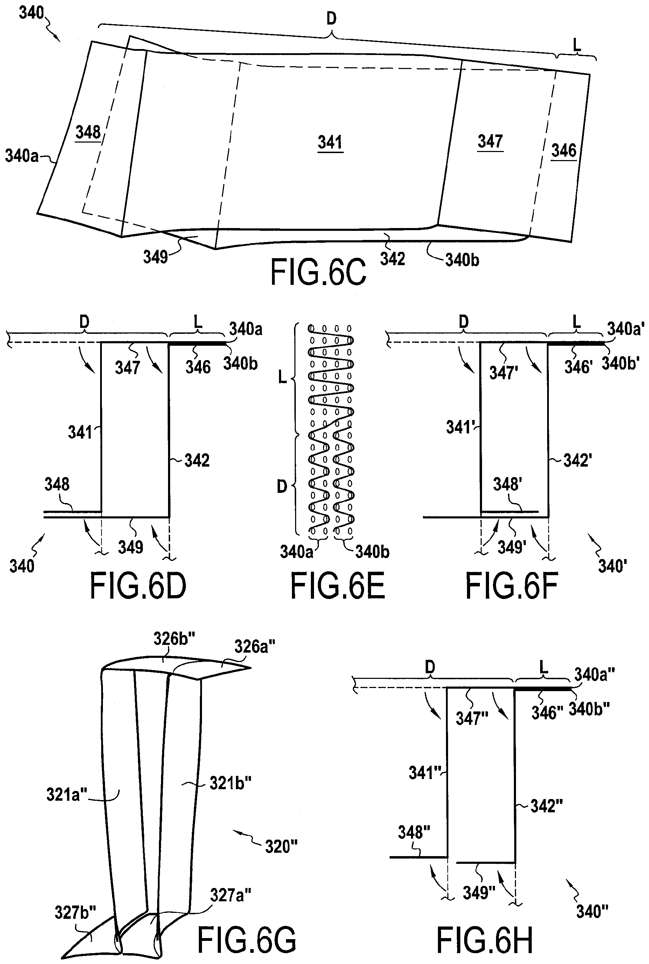

La FIG 6C représente à plat la préforme 340 tissée 3D permettant de réaliser ce quatrième exemple de module 320. La FIG 6D illustre la mise en forme de cette préforme 340 afin d'obtenir le module 320. Cette préforme 340 comprend une première nappe 340a et une deuxième nappe 340b tissées conjointement et possédant une courte zone de liaison L et une grande zone de déliaison D.

Des méthodes de tissage permettant une telle déliaison sont désormais bien connues dans le domaine du tissage 3D. A titre d'illustration, la FIG 6E schématise à l'extrême un tel tissage délié. Dans la zone de liaison L, les nappes 340a et 340b sont tissées conjointement avec des fils de trame communs traversant toute l'épaisseur de l'ensemble formé de la première nappe 340a et de la deuxième nappe 340b, afin de relier entre elles toutes les couches des fils de chaîne. Dans la zone de déliaison D, les nappes 340a et 340b sont tissées conjointement avec des fils de trame indépendants pour chaque nappe 340a et 340b, de sorte qu'un plan de déliaison est ménagé entre la première nappe 340a et la deuxième nappe 340b.

D'amont en aval, c'est-à-dire de la droite vers la gauche des figures, cette préforme 340 comprend la zone de liaison L avec un premier tronçon transversal 346, qui formera la première partie transverse d'aubage supérieure 326a, puis la zone de déliaison avec, pour la première nappe 340a, un deuxième tronçon transversal 347, qui formera la deuxième partie transverse d'aubage supérieure 326b, un premier tronçon longitudinal 341, qui formera la première aube 321a, et un troisième tronçon transversal 348, qui formera la portion supérieure de la deuxième partie transverse d'aubage inférieure 327b, et, pour la deuxième nappe 340b, un deuxième tronçon longitudinal 342, qui formera la deuxième aube 221b, et un quatrième tronçon transversal 349, qui formera la première partie transverse d'aubage inférieure 327a et la portion inférieure de la deuxième partie transverse d'aubage inférieure 327b.

Outre l'emploi d'une déliaison, tel que cela a été expliqué plus haut, le tissage et la mise en forme de cette préforme 340 ainsi que le procédé de formation du module sont analogues à ceux du premier exemple de réalisation et ne seront donc pas décrits de nouveau en détails. Dans cet exemple de réalisation, comme l'indiquent les flèches de la FIG 6D, la mise en forme consiste essentiellement à replier les tronçons longitudinaux 341, 342 de chaque nappe 340a, 340b par rapport aux premier et deuxième tronçons transversaux 346 et 347, à rabattre le troisième tronçon transversal 348 vers l'extérieur puis de rabattre le quatrième tronçon transversal 349 sur le troisième tronçon transversal 348.

Une variante analogue à celle de la FIG 5E est possible ici également : selon cette variante représentée sur la FIG 6F, le troisième tronçon transversal 348' est rabattu vers l'intérieur et le quatrième tronçon transversal 349' est rabattu sur le troisième tronçon transversal 348'.

Dans encore une autre variante représentée sur les FIG 6G et 6H, les parties transverses d'aubage inférieures 327a" et 327b" du module 320" ne se recouvrent pas mais se prolongent de manière ajustée l'une à côté de l'autre. Ainsi, lors de la mise en forme de la préforme 340", on rabat le quatrième tronçon transversal 349" vers le troisième tronçon transversal 348" qui jouxte alors ce dernier sans le recouvrir.

Les modes ou exemples de réalisation décrits dans le présent exposé sont donnés à titre illustratif et non limitatif, une personne du métier pouvant facilement, au vu de cet exposé, modifier ces modes ou exemples de réalisation, ou en envisager d'autres, tout en restant dans la portée de l'invention.

De plus, les différentes caractéristiques de ces modes ou exemples de réalisation peuvent être utilisées seules ou être combinées entre elles. Lorsqu'elles sont combinées, ces caractéristiques peuvent l'être comme décrit ci-dessus ou différemment, l'invention ne se limitant pas aux combinaisons spécifiques décrites dans le présent exposé. En particulier, sauf précision contraire, une caractéristique décrite en relation avec un mode ou exemple de réalisation peut être appliquée de manière analogue à un autre mode ou exemple de réalisation.

## Revendications

1. Préforme fibreuse pour un module d'aubes de carter intermédiaire de turbomachine, obtenue par tissage tridimensionnel, **caractérisée en ce qu'**elle est dépourvue de déliaison et comprend
un premier tronçon longitudinal (41), présentant des première et seconde extrémités opposées, apte à former une première aube (21),
un deuxième tronçon longitudinal (42), présentant des première et seconde extrémités opposées, apte à former une deuxième aube (21),
un premier tronçon transversal (46), reliant les premier et deuxième tronçons longitudinaux (41, 42) par leurs premières extrémités, apte à former une première partie transverse d'aubage (26) telle une bride ou une plate-forme.

2. Préforme fibreuse pour un module d'aubes de carter intermédiaire de turbomachine, obtenue par tissage tridimensionnel, comprenant
un premier tronçon longitudinal (341), présentant des première et seconde extrémités opposées, apte à former une première aube (21),
un deuxième tronçon longitudinal (342), présentant des première et seconde extrémités opposées, apte à former une deuxième aube (21),
un premier tronçon transversal (346), reliant les premier et deuxième tronçons longitudinaux (341, 342) par leurs premières extrémités, apte à former une première partie transverse d'aubage (26) telle une bride ou une plate-forme,
**caractérisée en ce qu'**elle comprend une première (340a) et une deuxième (340b) nappe, tissées conjointement, comportant
une zone de déliaison (D) dans laquelle la première nappe (340a) forme le premier tronçon transversal (347) et le premier tronçon longitudinal (341) et dans laquelle la deuxième nappe (340b) forme le deuxième tronçon longitudinal (342), et
une zone de liaison (L) formant un tronçon transversal supplémentaire (346), apte à former une partie transverse d'aubage (326a).

3. Préforme selon la revendication 1 ou 2, **caractérisée en ce qu'**elle comprend en outre
un deuxième tronçon transversal (146), s'étendant transversalement depuis la seconde extrémité du premier tronçon longitudinal (141), apte à former une deuxième partie transverse d'aubage (127), et
un troisième tronçon transversal (148), s'étendant transversalement depuis la seconde extrémité du deuxième tronçon longitudinal (142), apte à former une troisième partie transverse d'aubage (127).

4. Préforme selon la revendication 3, **caractérisée en ce que** le deuxième tronçon transversal (146) s'étend en s'éloignant du deuxième tronçon longitudinal (142), et
**en ce que** le troisième tronçon transversal (148) s'étend en s'éloignant du premier tronçon longitudinal (141).

5. Préforme selon la revendication 3, **caractérisée en ce que** le deuxième tronçon transversal (246) s'étend vers le deuxième tronçon longitudinal (242), et
**en ce que** le troisième tronçon transversal (248) s'étend en s'éloignant du premier tronçon longitudinal (241).

6. Préforme selon la revendication 3, **caractérisée en ce que** le deuxième tronçon transversal (246') s'étend vers le deuxième tronçon longitudinal (242'), et
**en ce que** le troisième tronçon transversal (248') s'étend vers le premier tronçon longitudinal (241').

7. Préforme selon la revendication 5 ou 6, **caractérisée en ce que** les deuxième et troisième tronçons transversaux (246, 248) se recouvrent au moins partiellement.

8. Module pour la réalisation d'un carter intermédiaire de turbomachine, ledit module (20) comportant deux aubes longitudinales (21) et une partie transverse d'aubage (26), telle une bride ou une plate-forme, reliant les deux aubes (21) à une de leurs extrémités,
**caractérisée en ce que** ledit module (20) est une pièce monobloc réalisée en matériau composite à partir d'une préforme fibreuse (40) selon l'une quelconque des revendications 1 à 7, ladite préforme (40) ayant été mise en forme dans un moule et noyée dans une matrice, de préférence de type organique.

9. Carter intermédiaire pour une turbomachine, **caractérisé en ce qu'**il comprend une pluralité de modules (20) selon la revendication 8 disposés angulairement entre un moyeu intérieur (11) et une virole extérieure (12).

10. Turbomachine, **caractérisée en ce qu'**elle comprend un carter intermédiaire (10) selon la revendication 9.

## Patentansprüche

1. Faserige Vorform für ein Schaufelmodul eines Zwischengehäuses einer Turbomaschine, erhalten durch dreidimensionales Weben, **dadurch gekennzeichnet, dass** sie frei von Auflockerungen ist und umfasst
einen ersten Längsabschnitt (41), der gegenüberliegende erste und zweite Enden aufweist, die geeignet sind, eine erste Schaufel (21) zu bilden,
einen zweiten Längsabschnitt (42), der gegenüberliegende erste und zweite Enden aufweist, die geeignet sind, eine zweite Schaufel (21) zu bilden,
einen ersten Querabschnitt (46), der den ersten und den zweiten Längsabschnitt (41, 42) über deren erste Enden verbindet und geeignet ist, einen ersten Querschaufelteil (26), wie einen Flansch oder eine Plattform, zu bilden.

2. Faserige Vorform für ein Schaufelmodul eines Zwischengehäuses einer Turbomaschine, erhalten durch dreidimensionales Weben, umfassend
einen ersten Längsabschnitt (341), der gegenüberliegende erste und zweite Enden aufweist, die geeignet sind, eine erste Schaufel (21) zu bilden,
einen zweiten Längsabschnitt (342), der gegenüberliegende erste und zweite Enden aufweist, die geeignet sind, eine zweite Schaufel (21) zu bilden,
einen ersten Querabschnitt (346), der den ersten und den zweiten Längsabschnitt (341, 342) über deren erste Enden verbindet und geeignet ist, einen ersten Querschaufelteil (26), wie einen Flansch oder eine Plattform, zu bilden, **dadurch gekennzeichnet, dass** sie eine erste (340a) und eine zweite (340b) Bahn umfasst, die zusammen gewebt sind, umfassend
eine Auflockerungszone (D), in der die erste Bahn (340a) den ersten Querabschnitt (347) und den ersten Längsabschnitt (341) bildet und in der die zweite Bahn (340b) den zweiten Längsabschnitt (342) bildet, und
eine Verbindungszone (L), die einen zusätzlichen Querabschnitt (346) bildet, der geeignet ist, einen Querschaufelteil (326a) zu bilden.

3. Vorform gemäß Anspruch 1 oder 2, **dadurch gekennzeichnet, dass** sie ferner umfasst
einen zweiten Querabschnitt (146), der sich quer vom zweiten Ende des ersten Längsabschnitts (141) erstreckt und geeignet ist, einen zweiten Querschaufelteil (127) zu bilden, und
einen dritten Querabschnitt (148), der sich quer vom zweiten Ende des zweiten Längsabschnitts (142) erstreckt und geeignet ist, einen dritten Querschaufelteil (127) zu bilden.

4. Vorform gemäß Anspruch 3, **dadurch gekennzeichnet, dass** sich der zweite Querabschnitt (146) vom zweiten Längsabschnitt (142) weg erstreckt und
dass sich der dritte Querabschnitt (148) vom ersten Längsabschnitt (141) weg erstreckt.

5. Vorform gemäß Anspruch 3, **dadurch gekennzeichnet, dass** sich der zweite Querabschnitt (246) zum zweiten Längsabschnitt (242) hin erstreckt und
dass sich der dritte Querabschnitt (248) vom ersten Längsabschnitt (241) weg erstreckt.

6. Vorform gemäß Anspruch 3, **dadurch gekennzeichnet, dass** sich der zweite Querabschnitt (246') zum zweiten Längsabschnitt (242') hin erstreckt und
dass sich der dritte Querabschnitt (248') zum ersten Längsabschnitt (241') hin erstreckt.

7. Vorform gemäß Anspruch 5 oder 6, **dadurch gekennzeichnet, dass** sich der zweite und dritte Querabschnitt (246, 248) zumindest teilweise überlappen.

8. Modul zur Herstellung eines Zwischengehäuses einer Turbomaschine, wobei das Modul (20) zwei Längsschaufeln (21) und einen Querschaufelteil (26), wie einen Flansch oder eine Plattform, aufweist, der die beiden Schaufeln (21) an einem ihrer Enden verbindet,
**dadurch gekennzeichnet, dass** das Modul (20) ein Monoblockteil aus Verbundmaterial aus einer faserigen Vorform (40) gemäß einem der Ansprüche 1 bis 7 ist, wobei die Vorform (40) in einem Formwerkzeug geformt und in eine Matrix, vorzugsweise eines organischen Typs, eingebettet ist.

9. Zwischengehäuse für eine Turbomaschine, **dadurch gekennzeichnet, dass** es mehrere Module (20) gemäß Anspruch 8 aufweist, die winklig zwischen einer inneren Nabe (11) und einem äußeren Ring (12) angeordnet sind.

10. Turbomaschine, **dadurch gekennzeichnet, dass** sie ein Zwischengehäuse (10) gemäß Anspruch 9 aufweist.

## Claims

1. A fiber preform for a vane module of an intermediate casing of a turbine engine, the preform being obtained by three-dimensional weaving and being **characterized in that** it is devoid of non-interlinked zone and comprises:
a first longitudinal segment (41) presenting opposite first and second ends and suitable for forming a first vane (21);
a second longitudinal segment (42) presenting first and second opposite ends and suitable for forming a second vane (21); and
a first transverse segment (46) connecting together the first and second longitudinal segments (41, 42) by their first ends, and suitable for forming a first transverse vane portion (26) such as a flange or a platform.

2. A fiber preform for a vane module of an intermediate casing of a turbine engine, the preform being obtained by three-dimensional weaving and comprising:
a first longitudinal segment (341) presenting opposite first and second ends and suitable for forming a first vane (21);
a second longitudinal segment (342) presenting first and second opposite ends and suitable for forming a second vane (21); and
a first transverse segment (346) connecting together the first and second longitudinal segments (341, 342) by their first ends, and suitable for forming a first transverse vane portion (26) such as a flange or a platform,
**characterized in that** it comprises first and second sheets (340a, 340b) that are woven together and that comprise
a non-interlinked zone (D) in which the first sheet (340a) forms the first transverse segment (347) and the first longitudinal segment (341), and in which the second sheet (340b) forms the second longitudinal segment (342), and
an interlinked zone (L) forming an additional transverse segment (346) suitable for forming a transverse vane portion (326a).

3. A preform according to claim 1 or 2, **characterized in that** it further comprises:
a second transverse segment (146) extending transversely from the second end of the first longitudinal segment (141) and suitable for forming a second transverse vane portion (127); and
a third transverse segment (148) extending transversely from the second end of the second longitudinal segment (142) and suitable for forming a third transverse vane portion (127).

4. A preform according to claim 3, **characterized in that** the second transverse segment (146) extends away from the second longitudinal segment (142), and
**in that** the third transverse segment (148) extends away from the first longitudinal segment (141).

5. A preform according to claim 3, **characterized in that** the second transverse segment (246) extends towards the second longitudinal segment (242), and
**in that** the third transverse segment (248) extends away from the first longitudinal segment (241).

6. A preform according to claim 3, **characterized in that** the second transverse segment (246') extends towards the second longitudinal segment (242'), and
**in that** the third transverse segment (248') extends towards the first longitudinal segment (241').

7. A preform according to claim 5 or claim 6, **characterized in that** the second and third transverse segments (246, 248) overlap, at least in part.

8. A module for making an intermediate casing of a turbine engine, said module (20) having two longitudinal vanes (21) and a transverse vane portion (26), such as a flange or a platform, interconnecting the two vanes (21) at one of their ends,
**characterized in that** said module (20) is a single-piece part made of composite material from a fiber preform (40) according to any one of claims 1 to 7, said preform (40) being shaped in a mold and embedded in a matrix, preferably of organic type.

9. An intermediate casing for a turbine engine, **characterized in that** it includes a plurality of modules (20) according to claim 8 arranged angularly between an inner hub (11) and an outer shroud (12).

10. A turbine engine, **characterized in that** it includes an intermediate casing (10) according to claim 9.
